# EUROPEAN PATENT APPLICATION

(11) **EP 4 760 153 A1**
(43) Date of publication of application: **17.06.2026**
(21) Application number: 24220367.7
(22) Date of filing: 16.12.2024
(51) Int. Cl.: F24C 15/20, B01D 53/34, B01D 53/96, F24F 8/158, F24F 8/167, B01D 53/86

(54) **ODOR FILTER SYSTEM WITH MAINTENANCE FREE AC-FILTER**

(71) Applicant: ELECTROLUX APPLIANCES AKTIEBOLAG, 105 45 Stockholm (SE)
(72) Inventor: RADHIMA, Ines, 47122 Forli (IT); FALCOMER, Daniele, 33080 Porcia (IT); LEO, Orlando, 47122 Forli (IT); TERZONI, Claudia, 47122 Forli (IT); WALTHER, Christoph, 91541 Rothenburg ob der Tauber (DE)
(74) Representative: Electrolux Group Patents

(57) **Abstract**

An odor filter system comprises: a case (12) comprising an air inlet (14) and an air outlet (16), the case (12) housing an air flow channel (18) for directing a filter operation air flow (F) from the air inlet (14) to the air outlet (16), an active carbon AC-filter (20) arranged in the air flow channel, and a catalytic module (22) arranged in the case (12) for regenerating the AC-filter (20),
the catalytic module (22) is a photocatalytic module (23) comprising a photocatalytic filter (24) and a light source (26) for illuminating the photocatalytic filter (24), wherein the photocatalytic module (23) is arranged upstream from the AC-filter (20) in the air flow channel (18) and is preferably a PECO module.

## Description

The present invention relates to an improved odor filter system for a household appliance such as a range hood, a downward extraction hob, an oven, an air purifier, etc., as well as to the corresponding appliance comprising the improved odor filter system.

For comfort and hygiene reasons, many household appliances as listed above, in particular in the kitchen, comprise an air extraction device and provide some air filtration aiming to clean the intake air from volatile organic compounds (VOC), odors and grease, and preferably releasing the cleaned air back into the home environment.

In these devices, an active carbon filter, or AC-filter in short, is used for adsorbing odor molecules from the intake air.

Most AC-filters used for home appliances available in the market require frequent regeneration by the user, e.g. through thermic processes, in particular by placing the filters in the oven, or through a rinsing process, e.g. in the dishwasher.

Alternatively, AC-filters that do not require regeneration have a short lifetime compared to that of the household appliance where the filter is installed, requiring the user to continuously purchase spare parts.

EP 4036483 A1 discloses an odor filter system with the features of the preamble part of claim 1 integrated in a downward extraction hob and using thermocatalysis to regenerate the AC-filter. For this purpose, the catalytic module of this document is arranged in a separate chamber of the case of the odor filter system, so that, during normal operation, the air flow within the case bypasses the catalytic module. In a regeneration mode however, the air outlet and preferably also the air inlet of the case are closed, the catalytic module is heated to about 150 - 160°C and air is repeatedly circulated between the AC-filter and the catalytic module, so that the odor molecules adsorbed in the AC-filter during normal operation are released by heat and are then oxidized and/or decomposed at the catalyst surface into non-odorous substances such as water and CO₂.

A similar odor filter system for use in a range hood is described in EP 4091699 A2, wherein this system uses an ozone generator instead of a thermocatalytic module to decompose odor molecules released from the AC-filter by heat in a regeneration mode.

EP 4325123 A1 describes different types of extraction devices, each device comprising a filter unit with AC-filters arranged near the air inlet of the respective device and a photocatalytic module as an additional odor filter at an outlet end of the extraction device.

Against this background, the object of the present invention is to provide an alternative maintenance free odor filter system.

For solving this problem, the invention proposes to use a photocatalytic module as the catalytic module for regenerating the AC-filter, the photocatalytic module comprising a photocatalytic filter and a light source for illuminating the photocatalytic filter. The photocatalytic module is arranged upstream from the AC-filter in the air flow channel and is preferably a PECO module, PECO being the abbreviation for photoelectrochemical oxidation.

By irradiating the photocatalytic filter with light, preferably with UV light, free radicals such as OH-radicals are generated at the catalyst surface, which are then transported to the AC-filter where they react with the adsorbed odor molecules resulting in non-odorous substances.

As the AC-filter is thus regenerated in-situ without any direct user intervention and the photocatalytic module is self-cleaning, and the resulting odor filter system according to the invention is largely maintenance free throughout the lifespan of the appliance where it is installed.

In addition to filter regeneration, the photocatalytic module also contributes to air sanitization. The technology of photocatalysis is well-known to have sanitizing properties for bacteria and mold removal. Evidence has been obtained both from literature and in experiments conducted by the applicant.

The present invention offers complete odor removal inside of a domestic venting system, such as a range hood, a downward extractor hob, an air purifier, or an oven, with low impact on the noise and pressure drop.

As the photocatalytic module according to the present invention does not need to be heated, the components of the odor filter system do not have to be designed to withstand elevated temperatures and can be arranged in close proximity to each other, so that the entire system can be made more compact than a system using thermocatalysis.

According to the invention, the AC-filter is arranged in the air flow channel downstream from the photocatalytic module.

In this application, unless indicated otherwise, terms such as upstream or downstream refer to the direction of the normal filter operation airflow from the air inlet to the air outlet of the odor filter system.

With the AC-filter being arranged downstream from the photocatalytic module, the normal filter operation air flow from the air inlet to the air outlet of the system can also be used as a regeneration air flow to convey the radicals generated at the photocatalytic filter to the AC-filter. Ath the carbon surface, the chemical degradation of volatile organic chemical compounds and odors then occurs.

In this sense, the odor filter system has the photocatalytic module as a first stage and the AC-filter as a second stage of the filter system.

In comparison to EP 4325123 A1 mentioned above, in which the PECO module is used only for odor removal, the photocatalytic module of the present invention is positioned in proximity to the AC-filter, preferably within a distance of less than 50 mm.

It is even more preferred that the AC-filter and the photocatalytic filter are in direct contact with each other, in order to make sure that most of the free radicals generated at the photocatalytic filter surface reach the AC-filter and the molecules adsorbed therein.

According to some embodiments, the photocatalytic filter comprises a ceramic panel or ceramic panels, including the catalyst, preferably a TiO₂ based photocatalyst.

The size and shape of a filter surface of the AC-filter can be configured to match the size and shape of a contact surface of the photocatalytic filter, e.g. the size and shape of the ceramic panel(s) of the catalyst part, e.g. to maximize the contact area.

The AC-filter can comprise an inert carrier and an active carbon layer deposited on the inert carrier. The carrier can be based on ceramic or textile or fiber or any combination thereof. As an alternative, the AC-filter can also comprise carbon pellets filling a filter cover.

It is also possible to integrate the AC-filter and the photocatalytic filter of the photocatalytic module by adding the photocatalyst, preferably TiO2, into an AC-filter, preferably an AC ceramic filter.

The light source can be an LED or an arrangement of such LEDs, preferably an LED bar or an arrangement of several LED bars, each LED or LED bar preferably generating visible light or UV light with a wavelength of below 410 nm, more preferably at a nominal wavelength of about 365 nm. In particular, the light source can be or comprise a UVA-LED.

The distance between the light source and the photocatalytic filter is preferably from 15 mm to 25 mm and is more preferably about 20 mm.

It is noted that photocatalytic technology is also effective for air sanitization, i.e. the microbiological species such as bacteria and fungi that come in contact with the photocatalytic filter can be degraded after a suitable contact time. So, the effectiveness for air sanitization is limited to species trapped by the catalyst itself. To improve air sanitization, it is possible to add UV-C LED(s) to the photocatalytic module.

The case and/or the airflow channel preferably has/have a shape that promotes the airflow and reduces pressure losses, wherein the shape can be e.g. cylindric, rectangular, square, divergent, convergent and any suitable combination thereof.

A mechanical filter, in particular a grease filter and/or particle filter, can be provided in the air flow channel upstream from the AC-filter and the photocatalytic module, which reduces the risk of the AC-filter and the photocatalytic module being soiled and ensures stable and efficient air purification during the whole life span of the appliance.

The AC-filter and the photocatalytic module in combination, optionally also in combination with the aforementioned mechanical filter, can form a filter assembly. The odor filter system according to the invention can comprise several of these filter assemblies arranged in series or in parallel with respect to the normal filter operation airflow.

According to some embodiments, a humidity generator can be installed in the air flow channel upstream from the photocatalytic module to promote the transport of active species released by photocatalysis to the AC-filter surface. If the system is installed in an appliance such as an extraction hob, an oven, an exhaust range etc., the humidity generator can also be installed as a separate unit upstream from the air inlet of the odor filter system.

If the system is installed in or used with an appliance having an airflow generator such as a fan unit, this external airflow generator can be used to generate the filter operation air flow from the air inlet to the air outlet of the odor filter system, this filter operation air flow can be used as or can contribute to a regeneration air flow to transport the free radicals from the photocatalytic filter to the AC-filter arranged downstream from the photocatalytic filter. The odor filter system according to the invention can be installed upstream or downstream from the external airflow generator with respect to the normal filter operation airflow as generated by this airflow generator.

However, in particular when the odor filter system is to be used as a separate unit, it can also comprise a dedicated airflow generator such as a fan arranged within the case and configured to generate or contribute to a regeneration air flow from the photocatalytic module to the AC-filter.

Optionally, the regeneration air flow can be in sections different from the filter operation air flow, and in this case the regeneration air flow can in particular be or can comprise a closed loop airflow for improving the regeneration efficiency.

To start the filter regeneration process, the light source of the photocatalytic module can be activated by a user via a user interface, e.g. provided on the corresponding domestic appliance or as a separate unit, in particular by a remote-control device such as the user's cell phone.

In addition, or as an alternative, the light source can also be activated via an automatic control unit, e.g. based on sensor data or according to some control algorithm, in particular a time-based algorithm.

In some embodiments, the odor filter system furthermore comprises a sensor for determining a current filter saturation level of the AC-filter. Preferably, the sensor is configured to be in communication with an external or internal control unit in order to automatically start the regeneration when the determined filter saturation level exceeds a predetermined threshold. The current filter saturation level can be indicated on a screen and/or by an app for user information.

Protection is also claimed for a household appliance comprising an odor filter system according to an embodiment of the present invention as described herein, wherein the household appliance is in particular an extraction hood, or a downward extraction hob or an air purifier or an oven.

The odor filter system can be integrated into the household appliance or can be formed as a separate module to be used as an accessory to the household appliance.

It is noted that the case of the odor filter system can be a separate case or can be formed by any suitable case of the household appliance in which the other components of the odor filter system are installed, e.g. an airflow generator housing, pipes, etc.

According to some embodiments, the household appliance is a downward extraction hob comprising a hob surface, an intake opening provided in the hob surface, and an airflow generator arranged below the hob surface and configured to suck in air or cooking vapors downwards through the intake opening, wherein the odor filter system is arranged at least partially below, preferably completely below the hob surface, in particular at an outlet end of the extraction hob or at an inlet of the airflow generator.

According to some other embodiments, the household appliance is an extraction hood comprising a hood bottom surface, an intake opening provided in the hood bottom surface, and an airflow generator arranged above the hood bottom surface and configured to suck in air upwards through the intake opening, wherein the odor filter system is arranged at least partially above, preferably completely above the hood bottom surface, preferably in an air duct downstream from the airflow generator or at an outlet end of a housing of the airflow generator.

The invention is explained in more detail with reference to some embodiments of the invention illustrated in the figures enclosed herewith.
**Fig. 1** illustrates a first embodiment of an odor filter system according to the invention in a cross-sectional view,
**Fig. 2** is a perspective view of parts of a downward extraction hob comprising an odor filter system according to an embodiment of the present invention.
**Fig. 3** is a schematic cross-sectional view of parts of a different downdraft extraction hob comprising an odor filter system according to a further embodiment of the present invention,
**Fig. 4** is a perspective view of the grease filter assembly of the extraction hob of **Fig. 3****,**
**Fig. 5** is a perspective view of main parts of the odor filter system of the extraction hob of **Fig. 3****,** and
**Fig. 6** is a schematic side view of an extraction hood comprising an odor filter system according to yet a further embodiment of the present invention.

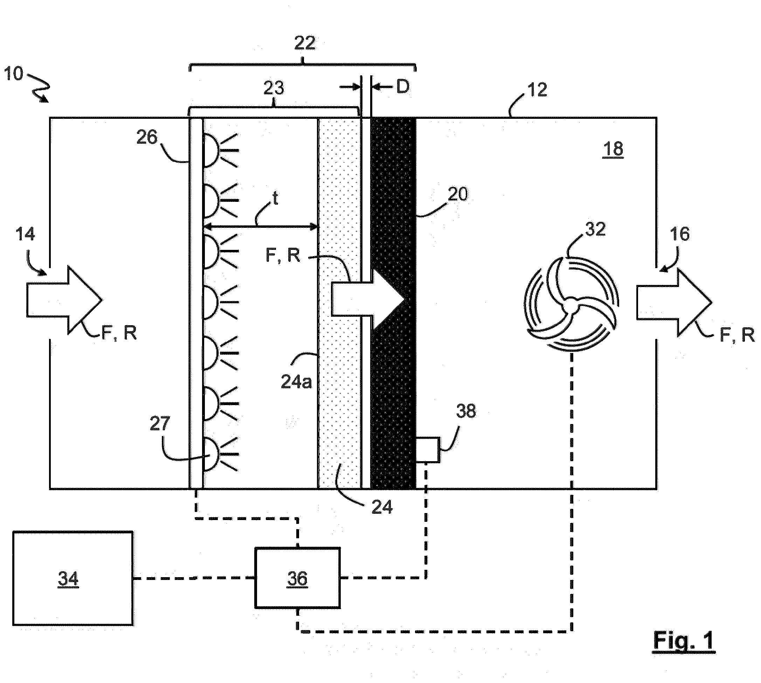

It is noted that some of the embodiments illustrated in the figures are shown in a simplified and schematic manner and that in particular **Figs. 1****,** **3** **and** **6** are not drawn to scale unless indicated otherwise.

Identical or corresponding features are denoted with the same reference signs for the different embodiments in all figures.

The odor filter system 10 illustrated in **Fig. 1** comprises a case 12 with an air inlet 14, an air outlet 16 and an air flow channel 18 that fluidically connects the air inlet 14 to the air outlet 16.

An active carbon AC-filter 20 and a photocatalytic module 23, e.g. a PECO module, are installed in the air flow channel 18, the AC-filter 20 being arranged in proximity to and downstream from the photocatalytic module 23 with respect to the direction of a filter operation air flow F generated by air flow generator 32 only illustrated schematically in **Fig. 1****.**

A distance D between a photocatalytic filter 24 of the photocatalytic module 23 and the AC-filter 20 is preferably less than 50 mm, wherein the photocatalytic filter 24 is formed as a ceramic carrier with embedded TiO₂ as the photocatalytic substance, that is illuminated with light generated by light source 26, preferably in the form of several LED bars for homogeneously illuminating a surface 24a of the photocatalytic filter 24 with light having a wavelength of preferably less than 410 nm and in particular of around 365 nm.

As an alternative, although not shown in **Fig. 1****,** the photocatalytic filter 24 can be in direct surface to surface contact with the AC filter 20, or the photocatalytic filter can even be integrated with the AC filter.

The filter saturation level of the AC-filter 20 can be measured by sensor 38 connected to a control unit 36 which is preferably configured to initiate the filter regeneration by switching on the light source 26 and controlling the air flow F via flow generator 32, when the measured saturation level has reached a predetermined threshold and/or when a predetermined time of normal filter operation has passed.

As an alternative or in addition, the filter regeneration can be initiated by a user via user interface 34.

In the example of **Fig. 1****,** the airflow generator 32 is installed downstream from the AC-filter 20, but as an alternative or in addition, an airflow generator could also be installed upstream from the photocatalytic module 23 within the air flow channel 18. Furthermore, an external airflow generator installed upstream or downstream from the odor filter system 10 could be used instead of or in addition to the integrated airflow generator 32.

Generally, the odor filter system of the present invention can comprise sensor(s) and a control system to enable real-time monitoring and optimization of filter performance. The control system can automatically adjust regeneration cycles, ensuring optimal filter efficiency. Monitoring and control of the filter regeneration can be performed locally at the odor filter system and/or domestic appliance and/or can be performed remotely via an app or a dedicated remote-control device. If the system does not comprise a sensor for detecting the current filter saturation level, control algorithms e.g. based on operation time can be used to initiate filter regeneration.

The odor filter system 10 according to the invention as illustrated in **Fig. 1** can be used as a standalone device, or it can be integrated in or used with any domestic appliance involving air extraction, in particular an extraction hood, a downdraft extraction hob, an oven or an air purifier. If the system is used as a standalone device, it preferably has an integrated airflow generator 32 as illustrated here.

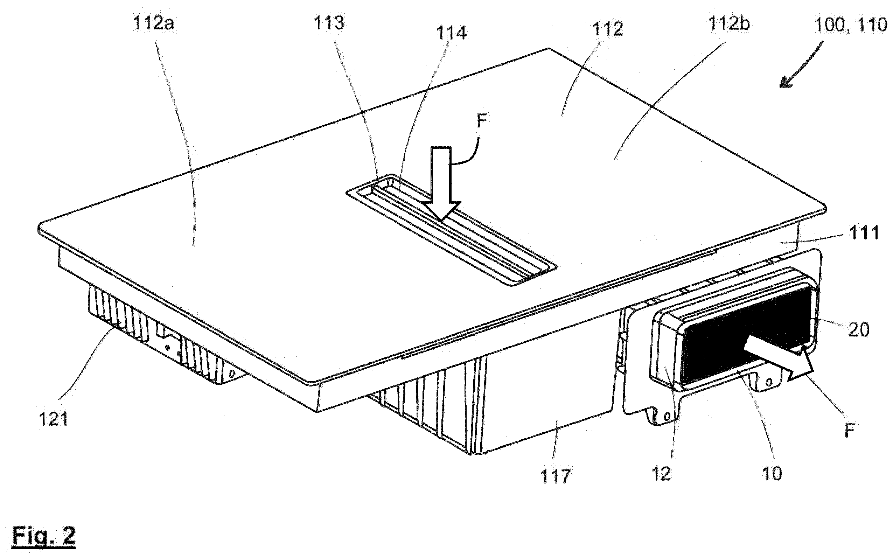

Parts of an example of a downdraft extraction hob 110 or combo hob as a domestic appliance 100 comprising an odor filter system 10 according to the present invention are illustrated in **Fig. 2****.**

The downdraft extraction hob 110 comprises an upper hob surface 112 on which food containers (not shown) can be positioned in cooking areas 112a and 112b for heating, the hob surface 112 comprising an intake opening 114 through which cooking vapors can be extracted downwards by means of an airflow generator (not visible in Fig. 2) installed in an extraction unit housing 117 arranged below the hob surface 112. The intake opening 114 can be partially covered by a removable grid 113 for safety reasons. Heating elements, e.g. induction coils, are provided in a hob housing 111 below the hob surface 112, and electronic components for controlling the heating elements and/or the airflow generator etc. are accommodated in an electronics module 121. The direction of the filter operation airflow F is indicated by arrows.

An odor filter system 10 according to the invention is provided as an accessory at an outlet end of the illustrated downdraft extraction hob 110 and thus downstream from the air flow generator in extraction unit housing 117. While the AC-filter 20 of the odor filter system 10 is visible and is illustrated in black in the figure, the photocatalytic module of the odor filter system 10 for regenerating the AC-filter 20 is arranged in close proximity upstream from and thus behind the AC-filter 20 in **Fig. 2** and is thus hidden from view.

As an alternative, it is also possible to have the new odor filter system upstream from the air flow generator, e.g. installed at an inlet opening of the extraction unit housing 117.

For the sake of simplicity, control unit, user interface and sensors for the odor filter system 10 are not illustrated in **Fig. 2** but can be provided in a similar manner as illustrated in **Fig. 1****.**

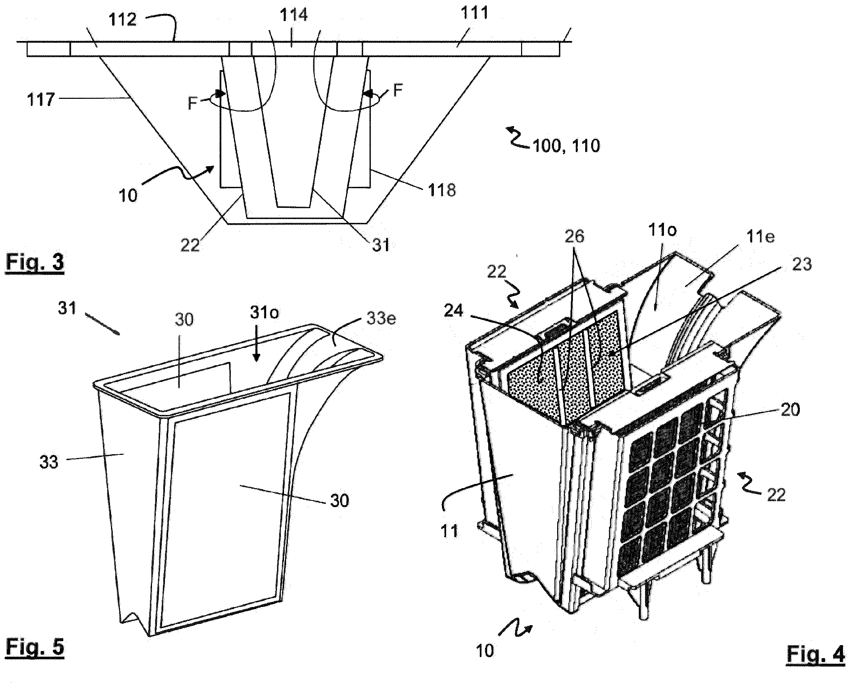

**Figs. 3-5** illustrate a further example of a downward extraction hob 110 which mainly differs from the embodiment of **Fig. 2** in the form and position of the new odor filter system 10 below and in proximity to the intake opening 114 and upstream from the airflow generator 118 that is installed within an extraction housing unit 117 and behind the odor filter system 10 in the side view of **Fig. 3****.**

Due to the bifurcating filter operation airflow F, two separate mechanical filters 30 and two separate odor filter assemblies 22 are provided as explained below.

In the embodiment, a grease filter assembly 31 separately illustrated in **Fig. 5** and comprising a grease filter holder 33 with two planar grease filter elements as mechanical filters 30 can be inserted from above through the intake opening 114 and can also be easily removed by the user for cleaning purposes.

In contrast to the removable grease filter assembly 31, the odor filter system 10 according to the invention can be fixedly installed below the hob surface 112 as, according to the invention, no maintenance is required.

Main parts of the odor filter system 10 are separately illustrated in **Fig. 4****.** It comprises an odor filter holder 11 fixed to the hob and supporting two separate odor filter assemblies 22 in a mirror symmetric, inverted V-configuration, each odor filter assembly 22 comprising a photocatalytic module 23 and an AC-filter 20 arranged downstream from the associated photocatalytic module 23 and in close proximity thereto or in direct surface-to-surface contact therewith. It is noted that the photocatalytic module 23 comprising LED-bars as a light source 26 and the photocatalytic filter 24 of **Fig. 4** have been added to an existing figure of a previous filter system and are only schematically shown.

**Figs. 4** and **5** further show that both the odor filter holder 11 and the grease filter holder 33 can have an matching arc-shaped extension 11e, 33e, thus widening, on the one side, an upper inlet opening 31o, 11o for cooking fumes, and providing, on the other side, a space below the arc-shaped extension 11e, 33e where the airflow generator 118, in particular a fan, can be arranged.

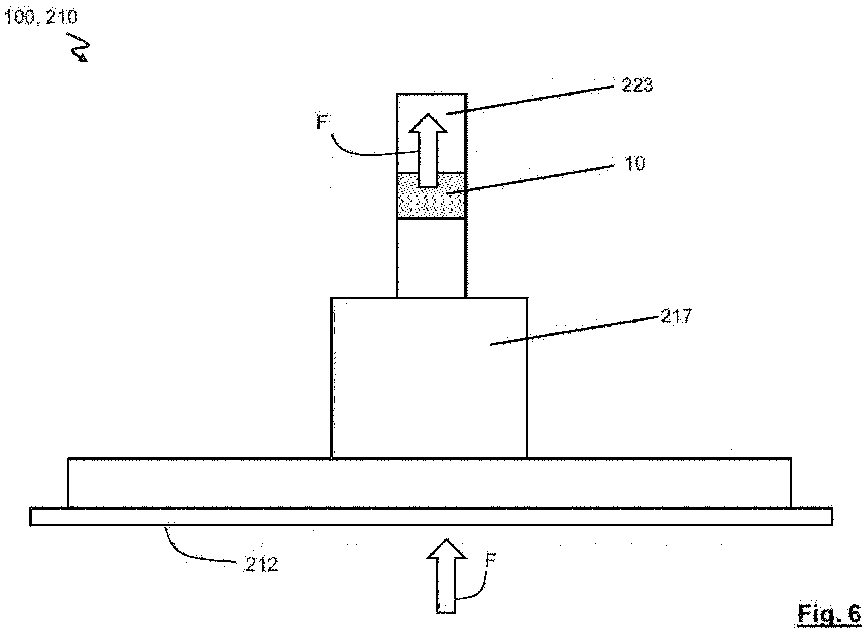

**Fig. 6** shows, in a very simplified manner, a side view of an extraction hood 210 comprising an integrated odor filter system 10 according to a further embodiment of the present invention.

The extraction hood 210 has a hood bottom surface 212, an intake opening (not visible) in the hood bottom surface and an airflow generator (not visible) arranged above the hood bottom surface 212 in an extraction device housing 217, the airflow generator being configured to suck in air upwards through the intake opening along a filter operation airflow F, e.g. from a cooking hob (not shown) positioned below the extraction hood 210.

In this embodiment, the new self-cleaning odor filter system 10 as described above is installed in an airduct (piping) 223 downstream from the airflow generator. As an alternative, the odor filter system 10 could be installed at the outlet end or the inlet end of the extraction device housing 217.

In all illustrated embodiments of **Figs. 2-6****,** the filter regeneration can occur during the normal cooking process and the corresponding exhaust operation of the hob. The filter regeneration can be initiated by a user command or automatically based on sensor data and/or time, or it can even be permanently active, i.e. the light source(s) of the new odor filter system can be active whenever the airflow generators are running.

Furthermore, it is noted that in the illustrated examples, the regeneration airflow during filter regeneration does not differ from the normal filter operation airflow during the cooking process. However, it should not be excluded to provide a separate airflow generator to produce or contribute to a dedicated regeneration airflow that could partially differ in direction and/or intensity from the filter operation airflow.

## Claims

1. Odor filter system (10), the system comprising:
a case (12) comprising an air inlet (14) and an air outlet (16), the case (12) housing an air flow channel (18) for directing a filter operation air flow (F) from the air inlet (14) to the air outlet (16),
an active carbon AC-filter (20) arranged in the air flow channel (18), and
a catalytic module (22) for regenerating the AC-filter (20),
**characterized in that** the catalytic module (22) is a photocatalytic module (23) comprising a photocatalytic filter (24) and a light source (26) for illuminating the photocatalytic filter (24), wherein the photocatalytic module (23) is arranged upstream from the AC-filter (20) in the air flow channel (18) and is preferably a PECO module.

2. Odor filter system (10) according to claim 1,
wherein the AC-filter (20) is arranged within a distance (D) of less than 50 mm from the photocatalytic module (23) and preferably so that the AC-filter (20) and the photocatalytic filter (24) are in direct contact with each other.

3. Odor filter (10) according to any of the preceding claims,
wherein the photocatalytic filter (24) comprises a ceramic panel containing a TiO₂ based photocatalyst, and/or
wherein the light source (26) comprises an LED, in particular an LED-bar (27), and/or wherein the light source (26) generates visible light or UV light, preferably with a wavelength of below 410 nm, and in particular UVA light,
and/or wherein a distance (t) between the light source (26) and the photocatalytic filter (24) is from 15 mm to 25 mm and is more preferably about 20 mm.

4. Odor filter (10) according to any of the preceding claims,
furthermore comprising a mechanical filter (30) arranged in the air flow channel (18) upstream from the photocatalytic module (23) and the AC-filter (20), wherein the mechanical filter (30) is preferably a grease filter and/or a particle filter.

5. Odor filter system (10) according to any of the preceding claims,
furthermore comprising a humidity generator installed in the air flow channel (18) upstream from the photocatalytic module (23).

6. Odor filter system (10) according to any of the preceding claims,
furthermore comprising an airflow generator (32) arranged in the case (12) and configured to generate or contribute to a regeneration air flow from the photocatalytic module (23) to the AC-filter (20), wherein the regeneration air flow is an open loop airflow or a closed loop airflow.

7. Odor filter system (10) according to any of the preceding claims, wherein the light source (26) is activable via a user interface (34) and/or via an automatic control unit (36).

8. Odor filter system (10) according to any of the preceding claims, furthermore comprising a sensor (38) for determining a current filter saturation level of the AC-filter (20).

9. Household appliance (100) comprising an odor filter system (10) according to any of the preceding claims, wherein the household appliance (100) is in particular an extraction hood (210), or a downward extraction hob (110), or an air purifier, or an oven.

10. Household appliance (100) according to claim 9, wherein the household appliance (100) is a downward extraction hob (110) comprising an upper hob surface (112), an intake opening (114) provided in the upper hob surface (112) and an airflow generator (118) arranged below the hob surface (112) and configured to suck in air downwards through the intake opening (114), wherein the odor filter system (10) is arranged at least partially below the upper hob surface (112), in particular at an outlet end of the downward extraction hob (110) or at an inlet of the airflow generator (118).

11. Household appliance (100) according to claim 10, wherein the household appliance (100) is an extraction hood (210) comprising a hood bottom surface (212), an intake opening (214) provided in the hood bottom surface (212), and an airflow generator arranged above the hood bottom surface (212) and configured to suck in air upwards through the intake opening (214), wherein the odor filter system (10) is arranged at least partially above the hood bottom surface (212), preferably in an air duct downstream from the airflow generator or at an outlet end of a housing (217) of the airflow generator.
